# FASCICULE DE BREVET EUROPEEN

(11) **EP 1 126 776 B1**
(45) Date de publication et mention de la délivrance du brevet: **02.04.2003**
(21) Numéro de dépôt: 99955979.2
(22) Date de dépôt: 05.11.1999
(51) Int. Cl.: A47J 42/04, A47J 42/38

(54) **BROYEUR MANUEL POUR DES PRODUITS ALIMENTAIRES EN GRAINS**
HANDMÜHLE FÜR KÖRNIGE NAHRUNGSMITTEL
MANUAL GRINDER FOR GRAIN FOOD PRODUCTS

(30) Priorité: 06.11.1998 LU 90316
(43) Date de publication de la demande: 29.08.2001
(73) Titulaire: L&M SERVICES B.V., 1071 CG Amsterdam (NL)
(72) Inventeur: WAGNER, Armand, L-4277 Esch/Alzette (LU)
(74) Mandataire: Busnel, Jean-Benoît
(86) Numéro de dépôt international: EP9908692
(87) Numéro de publication internationale: WO00027264

(56) Documents cités:
- DE-A- 2 852 398
- US-A- 4 960 246

## Description

La présente invention concerne un broyeur manuel pour des produits alimentaires en grains tels que des épices.

Il existe déjà des moulins ou broyeurs destinés à être montés sur le col de récipients préalablement remplis de produits granuleux pour former un mode de conditionnement et de distribution prêt à l'emploi.

Ces broyeurs sont réalisés sous forme d'au moins deux ou trois pièces indépendantes qui doivent être assemblées entre elles et selon un ordre précis avant ou pendant le montage sur le récipient, ce qui implique des opérations de fabrication laborieuses et donc coûteuses.

Le document US-A-4,960,246 divulgue un broyeur manuel destiné à être monté sur le col d'un récipient de produits alimentaires en grains, et comprenant, d'une part, une bague fixe pourvue d'une collerette de support sur le récipient qui se prolonge vers le bas par une couronne interne venant s'emmancher dans ledit col et présentant une paroi latérale interne crantée et, d'autre part, un capot monté rotatif sur ledit col en coiffant ladite bague et qui comporte une jupe périphérique raccordée à une douille centrale présentant une paroi latérale externe crantée et venant s'engager coaxialement dans ladite couronne en délimitant entre elles une zone périphérique de broyage.

Cependant, le positionnement relatif des trois pièces mobiles l'une par rapport à l'autre qui assure le broyage est une opération délicate qu'il est difficile de contrôler et qui peut entraîner en cas de défaut des problèmes sérieux de fonctionnement.

Au surplus, la finesse et donc la qualité du broyage dépendent principalement de l'étroitesse de la zone intercalaire comprise entre ces deux pièces, ce qui nécessite un ajustement précis à l'assemblage qu'il est difficile d'obtenir de manière automatique et reproductible sur des chaînes de montage et de conditionnement.

La présente invention a pour but de résoudre ces problèmes techniques de manière satisfaisante.

Ce but est atteint, conformément à l'invention au moyen d'un broyeur manuel destiné à être monté sur le col d'un récipient de produits alimentaires en grains, caractérisé en ce qu'il comprend, d'une part, une bague fixe pourvue d'une collerette de support sur le récipient qui se prolonge vers le bas par une couronne interne venant s'emmancher dans ledit col et présentant une paroi latérale interne crantée et, d'autre part, un capot monté rotatif sur ledit col en coiffant ladite bague et qui comporte une jupe périphérique raccordée radialement à une douille centrale présentant une paroi latérale externe crantée et venant s'engager coaxialement dans ladite couronne en délimitant entre elles une zone périphérique de broyage.

Selon une caractéristique avantageuse, ladite jupe est raccordée radialement à ladite douille au moyen de pontets délimitant entre eux des orifices d'évacuation du produit broyé.

De préférence, lesdits pontets s'étendent dans le plan de la face supérieure dudit capot.

Selon une autre caractéristique, ladite jupe périphérique est pourvue d'organes d'encliquetage destinés à coopérer avec des organes complémentaires portés par le col du récipient.

Dans le but d'améliorer la flexibilité de la jupe, il est possible de prévoir, en outre, localement des amincissements de sa paroi.

Selon une autre caractéristique, ladite collerette de support comporte des organes de blocage en rotation destinés à coopérer avec des organes complémentaires portés par le col du récipient.

Selon une variante particulière, lesdits organes de blocage sont constitués d'une série continue de dents portée par la face inférieure de ladite collerette et destinée à se verrouiller sur -au moins une dent complémentaire ménagée sur le rebord supérieur du col.

De préférence, lesdites dents de la collerette et du col sont constituées d'une face inclinée d'absorption des efforts de rotation et d'une face plus abrupte de transmission desdits efforts.

Selon une autre variante, ladite couronne est en serrage radial contre la paroi interne dudit col.

Selon d'autres caractéristiques, ledit capot rotatif comporte une gorge annulaire de guidage dans laquelle est engagé de manière coulissante le bord périphérique de ladite collerette tandis que la face supérieure de ladite collerette est pourvue d'une nervure annulaire venant en contact de glissement avec la face inférieure du capot.

Le broyeur de l'invention permet d'obtenir de façon automatique un positionnement relatif correct du capot mobile et la bague fixe sans qu'il soit nécessaire de prévoir une indexation des deux pièces l'une par rapport à l'autre.

Par ailleurs, la bague est bloquée en rotation sur le récipient sans glissement, ce qui assure au broyage un bon rendement mécanique.

En outre, la qualité du broyage est garantie grâce à la transmission automatique des efforts depuis le récipient entraîné en rotation en position inversée jusqu'à la couronne crantée de la bague interne qui se rapproche alors légèrement de la douille crantée du capot maintenu immobile par l'utilisateur.

Le broyeur de l'invention n'est donc constitué que de deux pièces qui sont faciles à fabriquer et à assembler et qui permettent un montage rapide et résistant sur le récipient tout en offrant à l'ensemble un profil très ergonomique et compact.

L'invention sera mieux comprise à la lecture de la description qui va suivre accompagnée des dessins sur lesquels :
- la figure 1 représente une vue d'ensemble en coupe d'un mode de réalisation de l'invention ;
- les figures 2a, 2b et 2c représentent des vues de détail respectivement en perspective, de dessus et en coupe selon AA de la bague de la figure 1 ;
- les figures 3a, 3b, 3c représentent des vues de détail respectivement en perspective, de dessus et en coupe selon DD du capot de la figure 1 ;
- les figures 4a et 4b représentent des vues de détail respectivement en perspective et en coupe d'une variante de réalisation d'un col de récipient adapté à un broyeur selon le mode de réalisation de la figure 1.

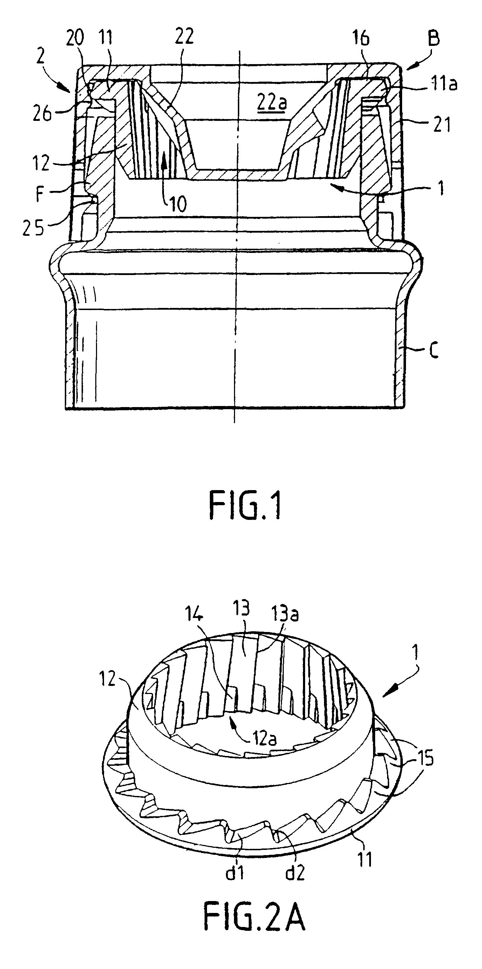

Le broyeur B représenté sur la figure 1 est destiné à être monté sur un col C de récipient contenant un produit alimentaire en grains (poivre...) et à être actionné de façon manuelle par le consommateur.

L'assemblage des pièces constitutives du broyeur est réalisé avant livraison au conditionneur du produit qui effectuera ensuite directement le montage sur le récipient après remplissage.

Par conséquent, le montage du broyeur est réalisé de telle sorte que le récipient n'a pas vocation à être rechargé et soit donc jetable après consommation du produit.

Ce broyeur comprend, d'une part, une bague fixe 1 immobilisée sur le col C du récipient et coiffée par un capot 2 mobile en rotation relativement à ladite bague et audit récipient en étant retenu axialement sur ledit col.

Lorsque le récipient est disposé tête en bas avec son col C en position inférieure, le capot 2 est maintenu immobile par l'utilisateur et la rotation récipient s'effectue alors relativement au capot 2 en entraînant la bague 1 de façon à assurer le broyage des grains susceptibles de pénétrer dans la zone intercalaire et la distribution de la poudre résultante par gravité.

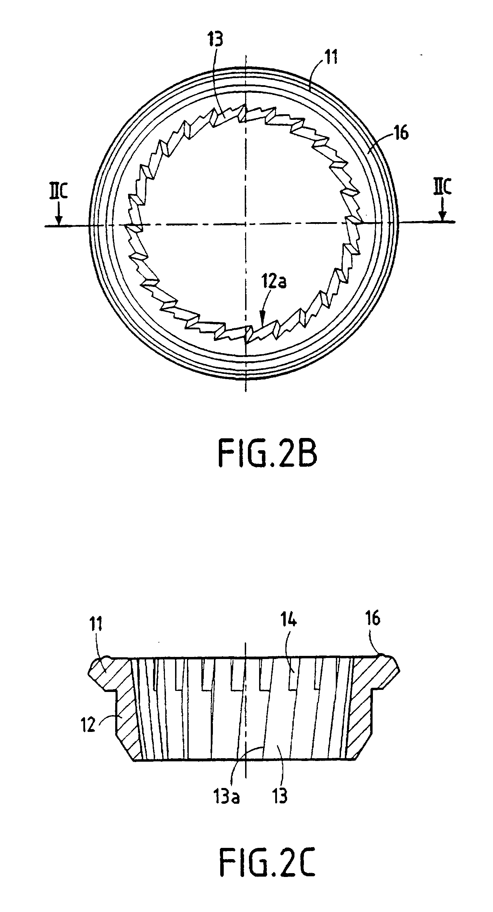

Comme représenté plus précisément sur les figures 2a à 2c, la bague 1 est pourvue d'une collerette 11 de support sur le rebord du col C.

La collerette 11 est prolongée vers le bas en délimitant un épaulement par une couronne interne 12 qui vient s'emmancher dans le col C, de préférence avec serrage radial. La collerette 11 comporte des organes de blocage en rotation destinés à coopérer avec des organes complémentaires portés par le rebord du col C.

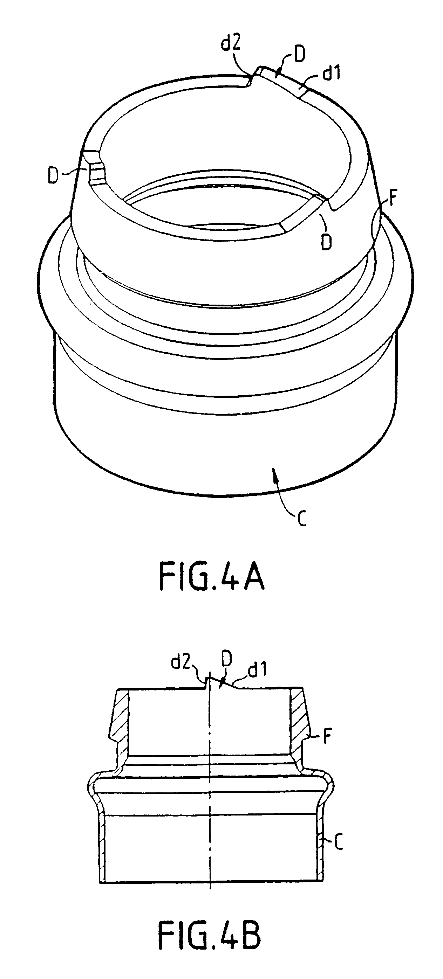

Dans le mode de réalisation représenté sur la figure 2a, la face inférieure de la collerette 11 porte une série continue de dents 15 apte et destinée à se verrouiller sur au moins une dent D complémentaire et sur la figure 4a, trois dents complémentaires, ménagées sur le bord supérieur du col C.

Les dents D et les dents 15 sont constituées d'une face inclinée de positionnement d1 et d'une face plus abrupte d2 de blocage en rotation et de guidage (voir figures 2a, 4a et 4b).

Cette configuration permet par simple appui sur le capot 2 d'obtenir le calage des dents D du col C entre les dents 15 de la collerette 11.

La paroi latérale interne de la couronne 12 est crantée sur toute sa hauteur. L'arête 13a des crans 13 est inclinée par rapport aux génératrices cylindriques ou tronconiques.

Dans leur partie supérieure, au niveau de la jonction avec la collerette 11, la face principale des crans 13 est pourvue d'ailettes 14 à bord vif.

Le capot rotatif 2 comporte une jupe périphérique 21 raccordée radialement à une douille centrale 22.

La jupe 21 est pourvue extérieurement de cannelures facilitant la prise manuelle.

La douille centrale 22 a un profil tronconique et est engagée coaxialement dans la couronne 12 de telle sorte que sa paroi latérale externe crantée 22a soit disposée en regard de la paroi latérale interne crantée 12a de la couronne 12, en délimitant entre elles, une zone périphérique 10 de broyage à profil évasé.

La face inclinée d1 permet d'absorber les efforts excessifs imposés à la couronne 12 lors de la rotation du capot 2. La face abrupte d2 permet quant à elle la transmission de ces efforts du récipient à la couronne 12 via la collerette 11, ce qui a pour effet de resserrer la zone de broyage 10.

La douille 22 présente une cavité supérieure 20a à fond plat

La jupe 21 est raccordée à la douille 22 au moyen de pontets 23 délimitant entre eux des orifices 24 d'évacuation du produit broyé. Les pontets 23 s'étendent ici dans le plan de la face supérieure du capot 2.

La jupe 21 est pourvue d'organes d'encliquetage tels qu'un jonc 25 destiné à coopérer avec des organes complémentaires portés par le col C et réalisés ici sous forme d'un filet annulaire F (voir figure 1 et 4b).

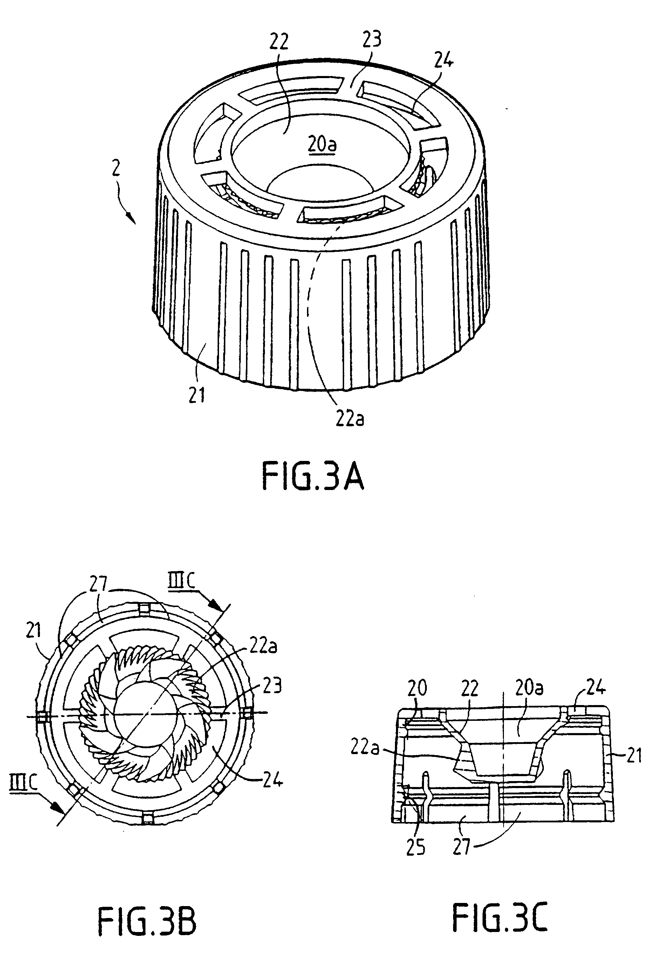

Lorsque le capot est réalisé avec un matériau rigide (tel qu'un thermoplastique) la flexibilité de la jupe 21 en vue de l'encliquetage, peut être améliorée en réalisant localement des amincissements 27 de sa paroi (voir figures 3B et 3C).

Ainsi, le seul appui sur le capot 2, en emprisonnant la bague 1, entraîne à la fois l'encliquetage de la jupe 21 sur le col C et le verrouillage de la couronne 12 impliquant le positionnement automatique et le blocage en rotation de la collerette 11.

La tendance de la bague 1 à s'écarter du col C lors de la rotation du capot 2 est contrée par la combinaison entre les organes d'encliquetage et les organes de blocage.

Le capot 2 comporte aussi une gorge annulaire 20 de guidage en rotation dans laquelle est engagé, de manière coulissante, le bord périphérique 11a de la collerette 11.

La gorge 20 est délimitée vers le haut par la face supérieure du capot et vers le bas par une saillie annulaire 26 ménagée sur la paroi interne de la jupe 21.

La face supérieure de la collerette 11 est pourvue aussi d'une nervure annulaire 16 venant en contact de glissement avec la face inférieure du capot 2 en formant entretoise.

## Revendications

1. Broyeur manuel destiné à être monté sur le col (C) d'un récipient de produits alimentaires en grains, et comprenant, d'une part, une bague fixe (1) pourvue d'une collerette (11) de support sur le récipient qui se prolonge vers le bas par une couronne interne (12) venant s'emmancher dans ledit col (C) et présentant une paroi latérale interne crantée (12a) et, d'autre part, un capot (2) monté rotatif sur ledit col (C) en coiffant ladite bague (1) et qui comporte une jupe périphérique (21) raccordée à une douille centrale (22) présentant une paroi latérale externe crantée (22a) et venant s'engager coaxialement dans ladite couronne (12) en délimitant entre elles une zone périphérique de broyage (10), **caractérisé en ce que** ladite jupe (21) est raccordée radialement à ladite douille (22) au moyen de pontets (23) délimitant entre eux des orifices d'évacuation (24) du produit broyé, de façon à ne former qu'une seule pièce.

2. Broyeur selon la revendication 1, **caractérisé en ce que** lesdits pontets (23) s'étendent dans le plan de la face supérieure dudit capot (2).

3. Broyeur selon l'une des revendications précédentes, **caractérisé en ce que** ladite jupe périphérique (21) est pourvue d'organes d'encliquetage (25) destinés à coopérer avec des organes complémentaires (F) portés par le col du récipient.

4. Broyeur selon l'une des revendications précédentes, **caractérisé en ce que** ladite collerette de support (11) comporte des organes de blocage en rotation destinés à coopérer avec des organes complémentaires portés par le col (C) du récipient.

5. Broyeur selon la revendication 4, **caractérisé en ce que** lesdits organes de blocage sont constitués d'une série continue de dents (15) portée par la face inférieure de ladite collerette (11) et destinée à se verrouiller sur au moins une dent complémentaire (D) ménagée sur le rebord supérieur du col (C).

6. Broyeur selon la revendication 5, **caractérisé en ce que** lesdites dents (15,D) de la collerette (11) et du col (C) sont constituées d'une face inclinée (d1) d'absorption des efforts de rotation et d'une face plus abrupte (d2) de transmission desdits efforts.

7. Broyeur selon l'une des revendications précédentes, **caractérisé en ce que** ladite couronne (12) est en serrage radial contre la paroi interne dudit col (C).

8. Broyeur selon l'une des revendications précédentes, **caractérisé en ce que** ledit capot rotatif (2) comporte une gorge annulaire (20) de guidage dans laquelle est engagé de manière coulissante le bord périphérique (11a) de ladite collerette (11).

9. Broyeur selon l'une des revendications précédentes, **caractérisé en ce que** la face supérieure de ladite collerette (11) est pourvue d'une nervure annulaire (16) venant en contact de glissement avec la face inférieure du capot (2).

10. Broyeur selon l'une des revendications précédentes, **caractérisé en ce que** ladite jupe périphérique (21) comporte localement des amincissements (27) de sa paroi.

## Claims

1. A manual grinder for mounting on the neck (C) of a receptacle for foodstuffs in the form of grains, the grinder comprising firstly a fixed ring (1) provided with a flange (11) for supporting it on the receptacle, which flange is downwardly extended by an inner sleeve (12) that is engaged in said neck (C) and that presents a toothed inner side wall (12a), and secondly a cap (2) rotatably mounted on said neck (C) covering said ring (1) and including a peripheral skirt (21) connected to a central bushing (22) having a toothed outer side wall (22a) that is engaged coaxially in said sleeve (12), so as to define between them a peripheral grinding zone (10), the grinder being **characterized in that** said skirt (21) is radially connected to said bushing (22) by means of bridges (23) leaving between them outlet orifices (24) for the ground foodstuff, so as to form a single part.

2. A grinder according to claim 1, **characterized in that** said bridges (23) lie in the plane of the top face of said cap (2).

3. A grinder according to any preceding claim, **characterized in that** said peripheral skirt (21) is provided with snap-fastening members (25) for cooperating with complementary members (F) carried by the neck of the receptacle.

4. A grinder according to any preceding claim, **characterized in that** said support flange (11) has locking members for locking it in rotation and designed to co-operate with complementary members carried by the neck (C) of the receptacle.

5. A grinder according to claim 4, **characterized in that** said locking members are constituted by a continuous series of teeth (15) carried by the bottom face of said flange (11) and designed to become locked on at least one complementary tooth (D) formed on the top rim of the neck (C).

6. A grinder according to claim 5, **characterized in that** each of said teeth (15, D) of the flange (11) and of the neck (C) is constituted by a sloping face (d1) for absorbing rotary forces, and by a steeper face (d2) for transmitting said forces.

7. A grinder according to any preceding claim, **characterized in that** said sleeve (12) is radially clamped against the inner wall of said neck (C).

8. A grinder according to any preceding claim, **characterized in that** said rotary cap (2) has an annular guide groove (20) slidably receiving the peripheral edge (11a) of said flange (11).

9. A grinder according to any preceding claim, **characterized in that** the top face of said flange (11) is provided with an annular rib (16) that comes into sliding contact with the bottom face of the cap (2).

10. A grinder according to any preceding claim, **characterized in that** said peripheral skirt (21) includes local thinning (27) of its wall thickness.

## Patentansprüche

1. Manuelle Mühle zum Installieren auf dem Hals (C) eines Behälters für Nahrungsmittelprodukte aus Körnern, der einerseits einen stationären Ring (1) mit einem Tragkragen (11) auf dem Behälter, wobei sich der Tragkragen durch einen inneren Kranz (12) nach unten verlängert und sich auf den Hals (C) aufschrumpft und eine gerastete innere Seitenwand (12a) aufweist, und andererseits eine Kappe (2) umfasst, die drehend auf dem Hals (C) über dem Ring (1) installiert ist und eine periphere Schürze (21) umfasst, die an eine zentrale Hülse (22) angeschlossen ist, die eine gerastete externe Seitenwand (22a) aufweist, die mit dem Kranz (12) koaxial in Eingriff steht und die unter einander eine periphere Mahlzone (10) abgrenzen, **dadurch gekennzeichnet, dass** die Schürze (21) radial an die Hülse (22) mittels Stegen (23) angeschlossen ist, die unter einander Entleerungsöffnungen (24) für das gemahlene Produkt abgrenzen, so dass nur ein einziger Teil gebildet wird.

2. Mühle nach Anspruch 1, **dadurch gekennzeichnet, dass** sich die Stege (23) in der Ebene der oberen Seite der Kappe (2) erstrecken.

3. Mühle nach einem der vorhergehenden Ansprüche, **dadurch gekennzeichnet, dass** die periphere Schürze (21) mit Einrastorganen (25) versehen ist, die dazu bestimmt sind, mit den ergänzenden, vom Behälterhals getragenen Organen (F), zusammenzuwirken.

4. Mühle nach einem der vorhergehenden Ansprüche, **dadurch gekennzeichnet, dass** der Tragkragen (11) drehungsblockierende Organe aufweist, die dazu bestimmt sind, mit den ergänzenden, vom Hals (C) des Behälters getragenen Organen zusammenzuwirken.

5. Mühle nach Anspruch 4, **dadurch gekennzeichnet, dass** die Blockierorgane aus einer kontinuierlichen Reihe von Zähnen (15) bestehen, die von der unteren Seite des Tragkragens (11) getragen werden und dazu bestimmt sind, sich auf zumindest einem ergänzenden Zahn (D), der auf dem oberen Rand des Halses (C) angeordnet ist, zu verriegeln.

6. Mühle nach Anspruch 5, **dadurch gekennzeichnet, dass** die Zähne (15, D) des Kragens (11) und des Halses (C) aus einer schrägen Fläche (d1) zum Absorbieren der Drehkräfte und einer steileren Fläche (d2) zum Übertragen dieser Kräfte bestehen.

7. Mühle nach einem der vorhergehenden Ansprüche, **dadurch gekennzeichnet, dass** der Kranz (12) radial gegen die Innenwand des Halses (C) geklemmt ist.

8. Mühle nach einem der vorhergehenden Ansprüche, **dadurch gekennzeichnet, dass** die Drehkappe (2) eine ringförmige Führungsrinne (20) umfasst, in der der periphere Rand (11a) mit dem Kragen (11) gleitend in Eingriff steht.

9. Mühle nach einem der vorhergehenden Ansprüche, **dadurch gekennzeichnet, dass** die obere Seite des Kragens (11) mit einer ringförmigen Rippe (16) versehen ist, die gleitend mit der unteren Seite der Kappe (2) in Berührung kommt.

10. Mühle nach einem der vorhergehenden Ansprüche, **dadurch gekennzeichnet, dass** die periphere Schürze (21) lokal Verschmälerungen (27) in ihrer Wand umfasst.
